(19) Europäisches Patentamt / European Patent Office / Office européen des brevets

(11) **EP 3 112 652 B1**

(12) **EUROPEAN PATENT SPECIFICATION**

(45) Date of publication and mention
of the grant of the patent:
**06.03.2019 Bulletin 2019/10**

(51) Int Cl.:
*F02M 26/49* *(2016.01)*    *F02M 26/00* *(2016.01)*

(21) Application number: **16168972.4**

(22) Date of filing: **10.05.2016**

(54) **EGR CONTROL METHOD AND EGR DEVICE**

AGR-STEUERUNGSVERFAHREN UND AGR-VORRICHTUNG

PROCÉDÉ DE COMMANDE ET DISPOSITIF DE RECYCLAGE DES GAZ D'ÉCHAPPEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2015 JP 2015130448**

(43) Date of publication of application:
**04.01.2017 Bulletin 2017/01**

(73) Proprietor: **ROBERT BOSCH GMBH
70469 Stuttgart (DE)**

(72) Inventors:
 • **TATE, Atsushi
   Higashimatsuyama-shi
   Saitama 3558603 (JP)**
 • **MATSUDA, Yoichi
   Higashimatsuyama-shi
   Saitama 3558603 (JP)**

(56) References cited:
**DE-A1- 4 135 190        DE-A1-102013 108 797
US-A1- 2014 251 287**

**Description**

[Technical Field]

The invention relates to operation control of an exhaust gas recirculation device for an internal combustion engine and, in particular, to operation control for suppressing and preventing degradation of operation efficiency due to secular change and for improving reliability of an operation of the device.

[Background Art]

As it has widely been known, an exhaust gas recirculation device (an EGR device) is used to improve an emission property and the like in an internal combustion engine, and various suggestions and implementation of a configuration, operation control, and the like thereof have conventionally been made (see JP-A-2004-245118 (pages 5 to 9, Fig. 1 to Fig. 6), for example).

In such an exhaust gas recirculation device, exhaust gas is circulated to an intake side via a communication passageway for communicating between an intake pipe and an exhaust pipe, and a circulation amount is usually adjusted by adjusting an opening degree of an EGR valve that is provided in the communication passageway.

By the way, it is needless to say that the exhaust gas to be circulated contains soot and the like. Along with use of the device for a long period, for example, the soot and the like are gradually adhered to an inner wall of the EGR valve, which results in a reduction in an effective opening area thereof and also results in degradation of operation efficiency of the entire device. Accordingly, it may not be possible to guarantee sufficient performance of the device.

As a measure against such a phenomenon, for example, a method for compensating for a change in a flow rate of circulated exhaust gas, which is caused by the gradual reduction in the effective opening area of the EGR valve, by executing flow rate control based on an I term (an integral term) component of PID control is considered.

In addition, a method for estimating in advance a magnitude of the change in the flow rate of the circulated exhaust gas, which is caused by the gradual reduction in the effective opening area of the EGR valve, and executing the flow rate control of the circulated exhaust gas by adding an estimated magnitude is considered.

US 2014/0251287 A1 describes an EGR controller for an internal combustion engine designed to determine a total-gas-flow-rate-error when the internal combustion engine is normally running and an EGR valve is closed. Moreover, DE 41 35 190 A1 discloses an EGR device designed to determine an EGR rate when an internal combustion engine is not working within an EGR operating range.

[Summary of Invention]

[Technical Problem]

However, the former flow rate control that is based on the I term (the integral term) of the PID control has such a disadvantage that transient responsiveness is degraded as a degree of contribution of the I term component in the flow rate control is increased. Accordingly, flow rate control in which both of the responsiveness and the contribution are compromised has to be adopted in reality. Thus, such a problem arises that satisfying control cannot always be realized.

Meanwhile, as in the latter case, in the method for estimating in advance the magnitude of the change in the flow rate of the circulated exhaust gas, an estimated value is used. Thus, such a problem arises that an actual change is not always compensated in a sufficient manner.

The invention has been made in view of the above circumstances and therefore provides an EGR control method and an EGR device capable of reliably detecting a reduction in a flow rate of circulated exhaust gas that is associated with secular change and capable of compensating for the reduction in the flow rate.

[Solution to Problem]

In order to achieve the above purpose, the invention provides an EGR control method with the features of claim 1 and an EGR device with the features of claim 6.

[Advantageous Effects of Invention]

According to the invention, the reduction in the flow rate in the EGR valve is detected on the basis of whether the distribution property of the circulated exhaust gas in the EGR valve is equal to a below the standard, and the flow rate of the circulated exhaust gas is corrected in accordance with the degree of the degradation of the distribution property. Thus, unlike the conventional art that uses an estimated value or the like, the reduction in the flow rate in the EGR valve, in other words, occurrence of clogging caused by soot and the like can reliably be comprehended, and suitable compensation for the reduction in the flow rate can be made. Therefore, an effect of being able to improve stability and reliability of an operation of the device is exerted.

[Brief Description of Drawings]

Fig. 1 is a configuration diagram for depicting a configuration example of a fuel injection controller of a common rail type as a fuel injection controller for an internal combustion engine that is provided with an EGR device in an embodiment of the invention.
Fig. 2 is a configuration diagram for depicting a configuration example of the EGR device in the embodiment of the invention.
Fig. 3 is a subroutine flowchart for depicting a procedure of a first example of EGR control processing in the embodiment of the invention that is executed in the EGR device depicted in Fig. 2.
Fig. 4 is a subroutine flowchart for depicting a procedure of flow rate control correction processing that is executed in the EGR control processing in the first example.
Fig. 5 is a subroutine flowchart for depicting a procedure of a second example of the EGR control processing in the embodiment of the invention that is executed in the EGR device depicted in Fig. 2.
Fig. 6 is a subroutine flowchart for depicting a procedure of flow rate control correction processing that is executed in the EGR control processing in the second example.

[Description of Embodiments]

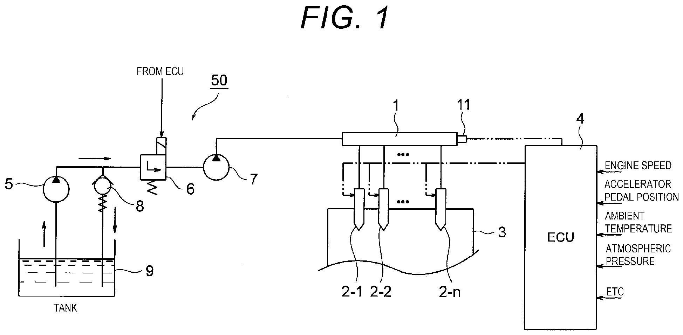

A description will hereinafter be made on an embodiment of the invention with reference to Fig. 1 to Fig. 6.
Noted that members, arrangement, and the like, which will be described below, do not limit the invention and various modifications can be made to the invention within the scope of the gist of the invention.
First, a description will be made on a configuration example of a fuel injection controller of a common rail type, for which an EGR controller is used, with reference to Fig. 1, an EGR control method for an internal combustion engine in the embodiment of the invention being used for the EGR device.
The fuel injection controller of the common rail type in the embodiment of the invention is configured by including as main components: a high-pressure pump device 50 that pressure-feeds high pressure fuel; a common rail 1 that stores the high pressure fuel pressure-fed from this high-pressure pump device 50; plural fuel injection valves 2-1 to 2-n that inject and supply the high pressure fuel supplied from this common rail 1 to cylinders of a diesel engine (hereinafter referred to as an "engine") 3 as the internal combustion engine; and an electronic control unit (indicated as "ECU" in Fig. 1) 4 that executes fuel injection control processing, EGR control processing for the internal combustion engine, which will be described below, and the like.
Such a configuration itself is the same as a basic configuration of the fuel injection controller of the common rail type of this type that has conventionally and widely been known.
The high-pressure pump device 50 has a known or well-known configuration that includes a supply pump 5, a metering valve 6, and a high-pressure pump 7 as main components.
In such a configuration, fuel in a fuel tank 9 is pumped up by the supply pump 5 and supplied to the high-pressure pump 7 via the metering valve 6. An electromagnetic proportional control valve is used as the metering valve 6. By controlling an energization amount thereof by the electronic control unit 4, a flow rate of the supplied fuel to the high-pressure pump 7, in other words, a discharge amount of the high-pressure pump 7 is adjusted.
Noted that a return valve 8 is provided between an output side of the supply pump 5 and the fuel tank 9, so as to be able to return a surplus of the fuel on the output side of the supply pump 5 to the fuel tank 9.
In addition, the supply pump 5 may be provided as a separate component from the high-pressure pump device 50 on an upstream side of the high-pressure pump device 50, or may be provided in the fuel tank 9.
The fuel injection valves 2-1 to 2-n are respectively provided for the cylinders of the engine 3, are each supplied with the high pressure fuel from the common rail 1, and each inject the fuel through injection control by the electronic control unit 4.
The electronic control unit 4 is, for example, centered on a microcomputer (not depicted) that has a known or well-known configuration, has memory elements (not depicted) such as a RAM and a ROM, and is configured by including: a circuit (not depicted) for energizing and driving the fuel injection valves 2-1 to 2-n; and a circuit (not depicted) for energizing and driving the metering valve 6 and the like, as main components.
Such an electronic control unit 4 receives a detection signal of a pressure sensor 11 that detects pressure of the common rail 1, and also receives various detection signals, such as an engine speed, an accelerator pedal position, an ambient temperature, and atmospheric pressure, so as to use these signals for operation control and fuel injection control of the engine 3 and further for EGR control processing and the like in the embodiment of the invention.

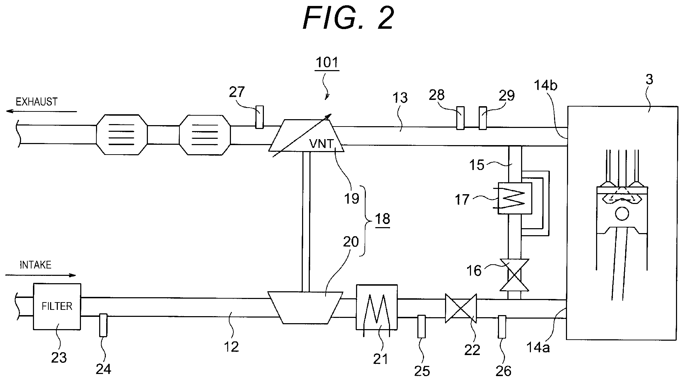

Fig. 2 depicts a configuration example of an exhaust gas recirculation device 101 that is provided for emission reduction of the engine 3 and the like, and a configuration thereof and the like will hereinafter be described with reference to the same drawing.

First, an intake pipe 12 for taking air that is required to combust the fuel and an exhaust pipe 13 for discharging exhaust gas are respectively connected to an intake manifold 14a and an exhaust manifold 14b of the engine 3.

A communication passageway 15 for communicating between the exhaust pipe 13 and the intake pipe 12 are provided at appropriate positions of the exhaust pipe 13 and the intake pipe 12, and an EGR cooler 17 for cooling passing exhaust gas and an EGR valve 16 for adjusting a communication state of the communication passageway 15, in other words, a circulation amount of the exhaust gas are sequentially disposed from the exhaust pipe 13 side in the middle of this communication passageway 15.

In addition, a variable turbocharger 18 that includes: a variable turbine 19 provided on a downstream side of the communication passageway 15 in the exhaust pipe 13; and a compressor 20 provided on an upstream side of the communication passageway 15 in the intake pipe 12, as main components, and that has a known or well-known configuration is provided. The compressor 20 rotates by rotary power that is obtained from the variable turbine 19, and compressed air is delivered as intake air to the intake manifold 14a.

Furthermore, the intake pipe 12 is provided with an intercooler 21 for cooling the intake air at an appropriate position between the communication passageway 15 described above and the variable turbocharger 18.

An intake throttle valve 22 for adjusting an intake air amount is provided between this intercooler 21 and the communication passageway 15.

Moreover, a filter 23 for cleaning the intake air is provided on an upstream side of the intake pipe 12, and an air mass sensor 24 for detecting the intake air amount that flows in via the filter 23 is provided on a downstream side thereof.

In addition, in the intake pipe 12, an intake air temperature sensor 25 for detecting a temperature of the intake air of the engine 3 is provided between the intercooler 21 and the intake throttle valve 22, and an intake pressure sensor 26 for detecting intake pressure of the intake manifold 14a is provided on a downstream side of the intake throttle valve 22.

Meanwhile, a λ sensor 27 is provided on a downstream side of the variable turbine 19 in the exhaust pipe 13.

In addition, an exhaust pressure sensor 28 for detecting exhaust pressure and an exhaust temperature sensor 29 for detecting a temperature of the exhaust gas are provided at appropriate positions on an upstream side of the variable turbine 19 in the exhaust pipe 13.

Detection signals of these air mass sensor 24, intake air temperature sensor 25, intake pressure sensor 26, λ sensor 27, exhaust pressure sensor 28, and exhaust temperature sensor 29 are input to the electronic control unit 4 and used for the fuel injection control processing, the EGR control processing for the internal combustion engine in examples of the invention, which will be described below, and the like.

Next, a description will be made on the EGR control processing for the internal combustion engine in the embodiment of the invention that is executed by the electronic control unit 4 with reference to Fig. 2 to Fig. 6.

First, an outline of the EGR control method for the internal combustion engine in the embodiment of the invention will be described.

In the EGR control method for the internal combustion engine in the embodiment of the invention, degradation of a distribution property of circulated exhaust gas, which is caused by soot and the like that are gradually adhered to an inner wall of the EGR valve 16 along with use of the EGR device for a long period, in other words, clogging of the EGR valve 16 is detected, and flow rate control thereof is corrected in accordance with a degree of clogging of the EGR valve 16.

In an EGR control method in a first example, which will specifically be described below, clogging of the EGR valve 16 is detected on the basis of a change in a flow rate in the EGR valve 16, and the flow rate control is corrected.

In addition, in an EGR control method in a second example, which will be described below, clogging of the EGR valve 16 is detected on the basis of differential pressure between front and rear of the EGR valve 16, and the flow rate control is corrected.

First, it is assumed that the EGR control processing based on a conventional method is executed in the electronic control unit 4 as the main component of the EGR device in the embodiment of the invention.

Here, as the EGR control processing that is based on the conventional method, a basic EGR control method in which a target value of a control target, such as the EGR valve 16, corresponding to an operation state of the engine 3 is arithmetically computed on the basis of measured values detected by the various sensors, such as the air mass sensor 24, the intake air temperature sensor 25, and the intake pressure sensor 26, as described above, and the like and in which feedback control is executed to achieve the desired target value can be raised (hereinafter such EGR control will be referred to as "normal feedback control" for convenience of the description).

In addition, as the EGR control processing based on the conventional method, it may be based on so-called model control, and such model control has conventionally and widely been known, for example, in JP-T-2005-504210 and the like.

More specifically, as a basis of the EGR control based on the model control, an EGR system that includes the variable turbocharger 18, the intake pipe 12, the exhaust pipe 13, and the like is modeled on the basis of thermodynamics and the like, data of the actually obtained flow rate, differential pressure, and the like are input to the model, a model value as a control target value in the EGR system is obtained, and operation control of the required control target is executed such that an operation state of the EGR system reaches a state with the model value.

Noted that, in the model control, a physical quantity that is set as the control target value (the model value) is the flow rate of the circulated exhaust gas, a valve position of the EGR valve 16, supercharging pressure, or the like, for example. Meanwhile, any of various values may be set as the model value in accordance with how to set the model on the basis of thermodynamics and the like. Thus, the model value does not have to be limited to a particular value and only has to be a value, with which the EGR system is modeled on the basis of thermodynamics and the like and the flow rate control of the circulated exhaust gas is executed on the basis of the model.

The EGR device in the embodiment of the invention depicted in Fig. 2 has a configuration in which the one variable turbocharger 18 is provided, but may have a so-called two-stage configuration in which the two variable turbochargers are provided.

Noted that, in the first and second examples of the EGR control processing, which will be described below, a description will be made with an assumption that the conventional EGR control processing is based on the so-called model control. When it is assumed that the EGR control is based on the "normal feedback control", a description on a different processing procedure and the like will be added upon necessary.

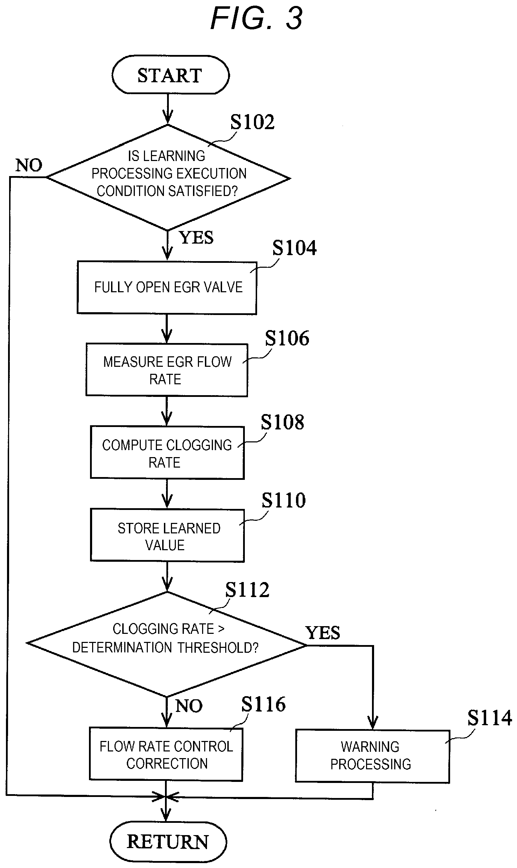

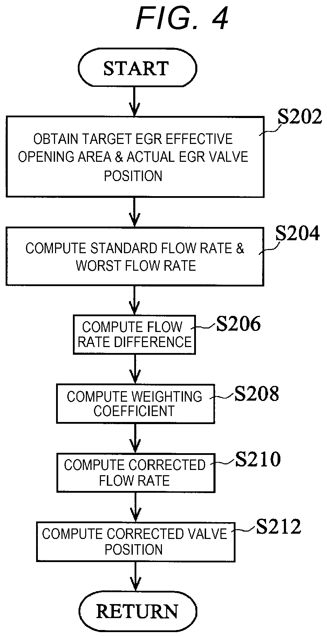

Under such an assumption, a description will be made on the first example of the EGR control processing in the embodiment of the invention, which is executed by the electronic control unit 4, with reference to subroutine flowcharts depicted in Fig. 3 and Fig. 4.

Noted that each of these subroutine flowcharts is executed in the electronic control unit 4 as one of various types of subroutine processing that are executed in a main routine of the conventional EGR control, which is based on the model control and is separately executed as described above.

When the processing by the electronic control unit 4 is initiated, it is first determined whether a learning processing execution condition is satisfied (see step S102 in Fig. 3).

That is, in the embodiment of the invention, as will be described below, so-called learning processing is executed in which, as an index indicative of the distribution property of the circulated exhaust gas (easiness of flowing of the circulated exhaust gas) in the EGR valve 16, in other words, a degree of clogging, a clogging rate is defined and obtained at appropriate time intervals and in which the clogging rate is stored and updated as a so-called learned value. It is determined in step S102 whether a specified condition that is appropriate for execution of processing in step S104 onward as the learning processing is satisfied.

Here, in the embodiment according to the invention, as the appropriate condition for initiation of the learning processing, specifically, it is at least required to bring the accelerator pedal position to zero during traveling of a vehicle and to bring fuel injection to the engine 3 by the fuel injection valves 2-1 to 2-n into a state of no injection. This is set for a purpose of avoiding as much as possible a situation where a traveling state is actively degraded. In embodiments not falling under the scope of the claims, the condition that is appropriate for the initiation of the learning processing does not have to be limited to the above-described condition. Alternative to the invention it is preferred to appropriately set another condition that does not affect an operation state or the traveling state of the vehicle as much as possible and that is required to stably and reliably execute the learning processing in consideration of a particular specification and the like of the vehicle.

Meanwhile, if it is determined in step S102 that the learning processing execution condition is not satisfied (if NO), a series of the processing is terminated as it is in a state where following processing should not be executed, and the subroutine once returns to the undepicted main routine.

On the other hand, if it is determined in step S102 that the learning processing execution condition is satisfied (if YES), the subroutine proceeds to the processing in step S104, which will be described next.

Next, the EGR valve 16 is brought into a fully opened state (see step S104 in Fig. 3), and the flow rate of the circulated exhaust gas that flows through the EGR valve 16 is measured (see step S106 in Fig. 3).

Here, in the embodiment of the invention, as will be described below, measurement of the flow rate of the circulated exhaust gas is realized by calculation using a flow rate computing equation, and actually measured values are used only for some of physical elements that are used in the flow rate computing equation.

That is, in the embodiment of the invention, a flow rate dmEGR of the circulated exhaust gas is obtained by the flow rate computing equation described below that is based on a so-called throttle equation.

$$dmEGR = f(Pus, Tus, Pds, Tds, A)$$

In the above computing equation, Pus and Tus respectively represent the exhaust pressure and an exhaust temperature on an upstream side of the communication passageway 15, that is, in the vicinity of the exhaust manifold 14b.

In addition, Pds and Tds respectively represent the intake pressure and the intake air temperature on a downstream side of the communication passageway 15, that is, in the vicinity of the intake manifold 14a.

Furthermore, A represents an opening area of the EGR valve 16.

In the embodiment of the invention, it is assumed that opening/closing control of the EGR valve 16 based on the model control is executed as described above. Thus, instead of the actually measured values, the exhaust pressure Pus and the exhaust temperature Tus are so-called model values that are obtained by calculation in the model control. Meanwhile, the actually measured values by the intake pressure sensor 26 and the intake air temperature sensor 25 are respectively used as the intake pressure Pds and the intake air temperature Tds.

Noted that, in the case where the EGR control is based on the "normal feedback control", the actually measured values that are detected by the exhaust pressure sensor 28 and the exhaust temperature sensor 29 are respectively used as the above-described exhaust pressure Pus and exhaust temperature Tus.

In addition, a correlation between a valve position of an undepicted valve and the opening area A in the EGR valve 16 is comprehended in advance, and is stored and retained in an appropriate storage area of the electronic control unit 4. Accordingly, the opening area A with respect to the valve position at a time point when the processing in step S106 is executed is computed on the basis of the stored correlation.

Next, the clogging rate is computed (see step S108 in Fig. 3) .

In the embodiment of the invention, the clogging rate is obtained by indexing the degree of clogging on the inside of the EGR valve 16, which is caused by the soot and the like. In a case of this first example, the clogging rate is expressed as a ratio of the flow rate of the circulated exhaust gas in the fully opened state of the EGR valve 16 at a time when the EGR device according to the invention is started to be used for the first time to the flow rate of the circulated exhaust gas at a current time point, which has been obtained in step S106.

That is, in cases where the flow rate of the circulated exhaust gas in the fully opened state of the EGR valve 16 at the time when the EGR device is started to be used for the first time is described as "dmEGRest" for convenience of the description, where the flow rate of the circulated exhaust gas at the current time point, which has been obtained in step S106, is described as "dmEGRact" for convenience of the description, and where the clogging rate computed on the basis of the flow rates is described as "Cfl" for convenience of the description, it is computed as the clogging rate Cfl = dmEGRest/dmEGRact.

Noted that the flow rate of the circulated exhaust gas in the fully opened state of the EGR valve 16 at the time when the EGR device is started to be used for the first time is measured in advance, is appropriately stored and retained in an appropriate storage area of the electronic control unit 4, and can be used for the above-described calculation.

Next, the clogging rate as a clogging rate learned value, which has been computed as described above, is stored and retained as a new clogging rate learned value in a learned value storage area that is secured in advance in an appropriate storage area of the electronic control unit 4. In this way, the last clogging rate learned value is updated (see step S110 in Fig. 3).

Next, it is determined whether the clogging rate Cfl computed in step S108 exceeds a flow rate clogging rate determination threshold Cref-fl. If it is determined that the clogging rate Cfl exceeds the flow rate clogging rate determination threshold Cref-fl (if YES), the subroutine proceeds to the processing in step S114. On the other hand, if it is determined that the clogging rate Cfl does not exceed the flow rate clogging rate determination threshold Cref-fl (if NO), the subroutine proceeds to the processing in step S116.

In step S114, because an original normal operation of the EGR device cannot be maintained in a state where the clogging rate Cfl exceeds the flow rate clogging rate determination threshold Cref-fl, predetermined warning processing, such as lighting of a lighting element like an MIL lamp (not depicted) or the like or sounding of a sounding element, is executed so as to warn an occupant of a fact that the operation of the EGR device is in an abnormal state.

Meanwhile, in step S116, correcting processing on the flow rate control of the circulated exhaust gas by the EGR control processing, which is separately executed in the electronic control unit 4, (hereinafter referred to as "flow rate control correction" for convenience of the description) is executed on the basis of the clogging rate computed in step S108, a series of the processing is terminated, and the subroutine once returns to the undepicted main routine.

In Fig. 4, a specific processing procedure of flow rate control correction is depicted in a subroutine flowchart, and contents thereof will hereinafter be described with reference to the same drawing.

First, when the processing by the electronic control unit 4 is initiated, a target EGR effective opening area and an actual EGR valve position are obtained (see step S202 in Fig. 4). First, the target EGR effective opening area is an opening area that is actually required for the EGR valve 16 to make the circulated exhaust gas at a target flow rate flow through the EGR valve 16. This target EGR effective opening area is usually expressed as a distribution area of the circulated exhaust gas in a plane that is orthogonal to a distribution direction of the circulated exhaust gas.

In the embodiment of the invention, such a target EGR effective opening area is computed on the basis of a predetermined arithmetic equation in the EGR control processing, which has been described above as a precondition and is based on the so-called model control.

Meanwhile, the actual EGR valve position is an actual position of the valve (not depicted) that is provided in the EGR valve 16. Because such an actual EGR valve position is correlated with a magnitude of an energizing current to the EGR valve 16, a correlation therebetween is obtained in advance in the embodiment of the invention. For example, a map that has the energizing current as an input parameter and from which the corresponding valve position can be read is stored in an appropriate storage area of the electronic control unit 4. In this way, the actual EGR valve position can be obtained from the magnitude of the energizing current to the EGR valve 16 at a time when the processing in step S202 is executed. Here, the valve position is displayed such that, for example, the valve position at which the EGR valve 16 is in a fully closed state is set as a valve position 0, the valve position at which the EGR valve 16 is in the fully opened state is set as 100, and the valve position therebetween is appropriately divided in accordance with the position of the undepicted valve on the inside (for example, the magnitude of the energizing current for convenience of the description). Thus, the valve position does not always correspond to the actual opening area of the EGR valve 16 described above.

Next, a standard flow rate and a worst flow rate are computed (see step S204 in Fig. 4).

Here, the standard flow rate refers to a flow rate of the circulated exhaust gas that is assumed to flow through the EGR valve 16 in the EGR control state at a current time point in the case where the EGR valve 16 has a property of a so-called standard product.

This standard flow rate is defined to have a fixed correlation with a combination of the target EGR effective opening area and the actual EGR valve position obtained in above step S202. In the embodiment of the invention, a map (hereinafter referred to as a "standard flow rate map" for convenience of the description) that is configured in advance that various combinations of the target EGR effective opening area and the actual EGR valve position are input on the basis of such a correlation and that the standard flow rate with respect to each of the combinations can be read is stored in an appropriate storage area of the electronic control unit 4. In this way, the standard flow rate that corresponds to the combination of the target EGR effective opening area and the actual valve position obtained in above step S202 can be obtained.

Noted that the correlation between the standard flow rate and the combination of the target EGR effective opening area and the actual EGR valve position is preferably determined on the basis of a test result, a simulation result, or the like in consideration of a particular specification and the like of the device.

Meanwhile, the worst flow rate refers to a minimum flow rate at which an EGR operation can be maintained in the case where the flow rate of the circulated exhaust gas of the EGR valve 16 is reduced due to secular change or the like.

Similar to the standard flow rate described above, such a worst flow rate has a fixed correlation with the combination of the target EGR effective opening area and the actual EGR valve position obtained in above step S202. Also, similar to a case of the standard flow rate, a map (hereinafter referred to as a "worst flow rate map" for convenience of the description) that is configured in advance that the various combinations of the target EGR effective opening area and the actual EGR valve position are input and that the worst flow rate corresponding to each of the combinations can be read is stored in an appropriate storage area of the electronic control unit 4. In this way, the worst flow rate that corresponds to the combination of the target EGR effective opening area and the actual valve position obtained in above step S202 can be obtained.

Noted that, similar to a case of the standard flow rate map described above, the correlation between the worst flow rate and the combination of the target EGR effective opening area and the actual EGR valve position is preferably determined on the basis of a test result, a simulation result, or the like in consideration of the particular specification and the like of the device.

Next, a flow rate difference is computed (see step S206 in Fig. 4).

That is, the flow rate difference as a difference between the standard flow rate and the worst flow rate that have been obtained as described above is computed.

Next, a weighting coefficient that is used at a time when the flow rate control is corrected is computed (see step S208 in Fig. 4).

That is, first, the target value of the flow rate of the circulated exhaust gas that should flow through the EGR valve 16 (hereinafter a "target flow rate" for convenience of the description) is arithmetically computed in the EGR control that is based on the model control in the embodiment of the invention. However, as for this target flow rate, the reduction in the flow rate of the circulated exhaust gas flowing through the EGR valve 16, which is caused by clogging of the EGR valve 16 and which is attempted to be solved in the invention of the subject application, is not taken into consideration.

The weighting coefficient can be used to correct the flow rate of the circulated exhaust gas that should flow through the EGR valve 16 and that is defined by the conventional EGR control processing in accordance with the clogging rate and thus to compensate for the reduction in the flow rate, which is caused by clogging of the soot and the like in the EGR valve 16.

In the embodiment of the invention, the weighting coefficient is defined in accordance with the clogging rate that is obtained as the learned value. That is, when the weighting coefficient is computed, it is preferred that a computing equation for computing the preferred weighting coefficient with respect to the clogging rate is set on the basis of a test result or a simulation result in consideration of the particular specification of the EGR device and that the weighting coefficient is computed by the computing equation. In addition, a so-called map (hereinafter referred to as a "weighting coefficient computation map" for convenience of the description) configured, for example, that the clogging rate is used as an input parameter and that the weighting coefficient corresponding to each of the various clogging rates can be read is preferably created on the basis of the computing equation and stored in advance in an appropriate storage area of the electronic control unit 4, so as to define the weighting coefficient by using the map.

Next, a corrected flow rate is computed by using the weighting coefficient that has been obtained as described above (see step S210 in Fig. 4).

That is, the corrected flow rate is obtained by multiplying the flow rate difference computed in above step S206 by the weighting coefficient and adding the worst flow rate obtained in above step S204 to a multiplication result.

Noted that, in a computation procedure of the above-described corrected flow rate, the flow rate that is computed by using the weighting coefficient as 1 and adding the worst flow rate to the flow rate difference becomes the so-called target flow rate that should flow through the EGR valve 16 in the conventional EGR control processing, in which the flow rate correction as in the invention is not made.

Next, the valve position of the EGR valve 16 that is required to obtain the corrected flow rate computed as described above is computed similar to a conventional manner (see step S212 in Fig. 4), a series of the processing is terminated, and the subroutine once returns to the undepicted main routine.

Noted that the EGR control, which is based on the model control as the precondition in the embodiment of the invention, is executed in the undepicted main routine and the EGR control is executed such that the valve position of the EGR valve 16 becomes a corrected valve position computed in step S212.

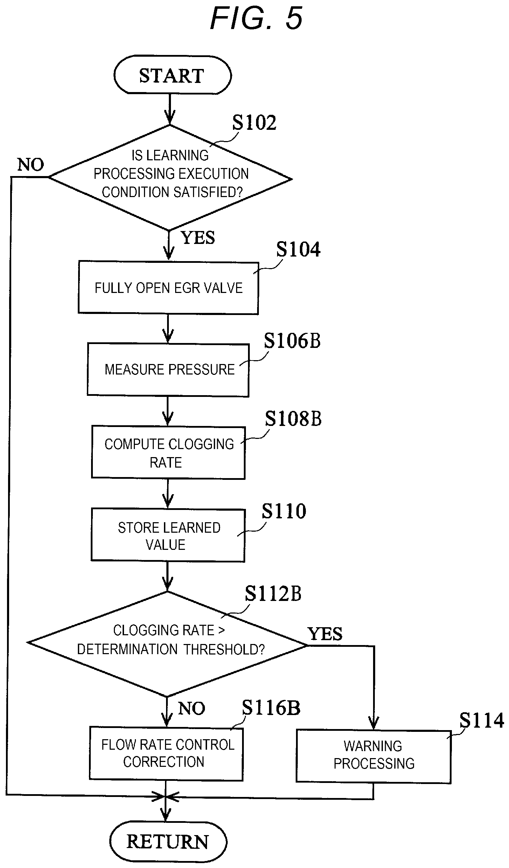

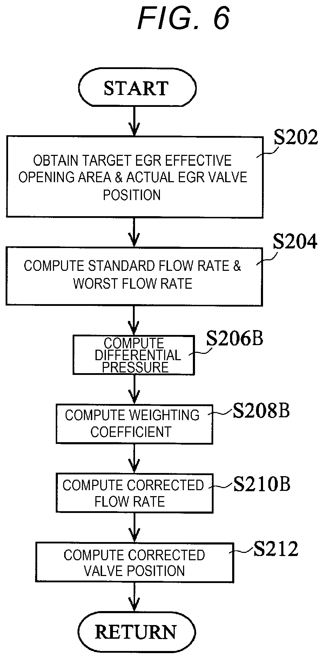

Next, the description will be made on the second example of the EGR control method with reference to Fig. 5 and Fig. 6.

Noted that, in subroutine flowcharts depicted in Fig. 5 and Fig. 6, the same contents of processing as those of the processing depicted in Fig. 3 and Fig. 4 above are denoted by the same reference signs and the detailed description thereon will not be repeated. Hereinafter, the description will be centered on different points.

In summary, in the EGR control method in this second example, clogging of the EGR valve 16 is detected on the basis of the differential pressure between the front and the rear of the EGR valve 16, and the flow rate control is corrected.

Noted that, because preconditions such as the device are basically the same as those in the above first example, the description will not be repeated.

When the processing by the electronic control unit 4 is initiated, it is first determined whether the learning processing execution condition is satisfied (see step S102 in Fig. 5). If it is determined that the learning processing execution condition is satisfied (if YES), the EGR valve 16 is brought into the fully opened state (see step S104 in Fig. 5), and the pressure in front and at the rear of the EGR valve 16 is measured (see step S106B in Fig. 5).

That is, pressure in the vicinity of the exhaust manifold 14b of the engine 3 (hereinafter referred to as "upstream-side pressure" for convenience of the description) and pressure in the vicinity of the intake manifold 14a (hereinafter referred to as "downstream-side pressure" for convenience of the description) are respectively obtained as the pressure on the upstream side of the EGR valve 16 and the pressure on the downstream side of the EGR valve 16.

In the embodiment of the invention, as described above, it is assumed that the EGR control based on the model control is executed. Accordingly, instead of the actually measured value by using the pressure sensor, a calculated value that is arithmetically computed in an execution process of the model control is used as the upstream-side pressure, and the actually measured value by the intake pressure sensor 26 is used as the downstream-side pressure.

Next, the clogging rate is computed (see step S108B in Fig. 5).

That is, as for the clogging rate of the EGR valve 16 in this second example, when the upstream-side pressure, the downstream-side pressure, and the clogging rate are respectively represented by "Pus", "Pds", and "Cdp", the clogging rate Cdp is obtained by the following equation.

$$Cdp = Pus/Pds$$

Next, the clogging rate as the clogging rate learned value that is computed as described above is stored and retained as the new clogging rate learned value in the learned value storage area that is secured in advance in the appropriate storage area of the electronic control unit 4. In this way, the last clogging rate learned value is updated (see step S110 in Fig. 5).

Next, it is determined whether the clogging rate Cdp computed in step S108B exceeds a differential pressure clogging rate determination threshold Cref-dp. If it is determined that the clogging rate Cdp exceeds the differential pressure clogging rate determination threshold Cref-dp (if YES), the subroutine proceeds to the processing in step S114. On the other hand, if it is determined that the clogging rate Cdp does not exceed the differential pressure clogging rate determination threshold Cref-dp (if NO), the subroutine proceeds to the processing in step S116B.

In step S114, similar to what has been described by using Fig. 2, the predetermined warning processing, such as lighting of the lighting element like the MIL lamp (not depicted) or the like or sounding of the sounding element, is executed so as to warn the occupant of the fact that the operation of the EGR device is in the abnormal state.

Meanwhile, in step S116B, correcting processing on the flow rate control of the circulated exhaust gas by the EGR control processing, which is separately executed in the electronic control unit 4, (hereinafter referred to as the "flow rate control correction" for convenience of the description) is executed on the basis of the clogging rate computed in step S108B, a series of the processing is terminated, and the subroutine once returns to the undepicted main routine.

In Fig. 6, a specific processing procedure of the flow rate control correction is depicted in the subroutine flowchart, and the content thereof will hereinafter be described with reference to the same drawing.

Noted that, the same contents of the processing as those of the processing depicted in above Fig. 4 are denoted by the same reference signs and the detailed description thereon will not be repeated. Hereinafter, the description will be centered on different points.

First, when the processing by the electronic control unit 4 is initiated, the target EGR effective opening area and the actual EGR valve position are obtained (see step S202 in Fig. 6). Then, the standard flow rate and the worst flow rate are computed (see step S204 in Fig. 6).

Next, the differential pressure is computed (see step S206B in Fig. 6).

In this case, because the differential pressure has already been computed in above step S106B, it is enough to use a computation result thereof.

Next, a weighting coefficient that is used at the time when the flow rate control is corrected is computed (see step S208B in Fig. 6).

The weighting coefficient in this second example is preferably computed by using a computing equation that is set on the basis of a test result or a simulation result in consideration of the particular specification of the EGR device and that is set such that the weighting coefficient is defined for each of various differential pressure.

Here, it is also preferred to create a map (hereinafter referred to as a "weighting coefficient computation map" for convenience of the description) that uses the differential pressure as an input parameter and from which the corresponding weighting coefficient can be read on the basis of the computing equation and to store the map in advance in an appropriate storage area of the electronic control unit 4, so as to define the weighting coefficient by using the map.

Next, a corrected flow rate is computed by using the weighting coefficient obtained as described above (see step S210B in Fig. 5).

That is, the flow rate difference as the difference between the standard flow rate and the worst flow rate obtained in above step S204 is computed. Then, the corrected flow rate is obtained by multiplying the computed flow rate difference by the weighting coefficient computed in step S208B and adding the worst flow rate obtained in above step S204 to a multiplication result.

Noted that, in the computation procedure of the above-described corrected flow rate, the flow rate that is computed by using the weighting coefficient as 1 and adding the worst flow rate to the flow rate difference becomes the so-called target flow rate that should flow through the EGR valve 16 in the conventional EGR control processing, in which the correction as in the invention is not made.

Next, the valve position of the EGR valve 16 that is required to obtain the corrected flow rate is computed similar to the conventional manner (see step S212 in Fig. 6), a series of the processing is terminated, and the subroutine once returns to the undepicted main routine.

The description has been made on each of the above-described first example and second example with the assumption of the configuration that the diesel engine 3 as the internal combustion engine is used. However, the internal combustion engine in the invention is not limited to the diesel engine 3 as long as the exhaust gas recirculation device 101 is mounted in the vehicle, and the invention can also be applied to the vehicle using a gasoline engine in a similar manner.

[Industrial Applicability]

The invention is suitable for the EGR device that is desired to reliably detect the reduction in the flow rate of the circulated exhaust gas in conjunction with the secular change and compensate the reduction.

[Reference Signs List]

1: common rail
3: engine
4: electronic control unit
16: EGR valve

**Claims**

1. An EGR control method for an EGR device (101) of a vehicle that is configured to be able to circulate some of exhaust gas of an internal combustion engine (3) to an intake side of the internal combustion engine (3),
   the EGR control method comprising the step of:

   correcting a circulation amount of the exhaust gas by an EGR valve (16) for controlling the circulation amount of the exhaust gas to the intake side in accordance with a degree of degradation of a distribution property of the exhaust gas in the EGR valve (16) when the distribution property falls below a specified standard;
   wherein the degree of degradation of the distribution property of the exhaust gas in the EGR valve (16) is a clogging rate of the EGR valve (16), which is updated only when a specified condition is satisfied,
   **characterized by** the steps of:

   investigating, whether an accelerator pedal position is brought to zero during traveling of the vehicle and whether fuel injection to the internal combustion engine (3) by fuel injection valves (2-1 to 2-n) is brought into a state of no injection; and
   determining that the specified condition is satisfied when at least the accelerator pedal position is brought to zero during traveling of the vehicle and the fuel injection to the internal combustion engine (3) by the fuel injection valves (2-1 to 2-n) is brought into a state of no injection.

2. The EGR control method according to claim 1 **characterized in that** the clogging rate is obtained as a ratio of a flow rate of the exhaust gas at a time when the EGR valve (16) is started to be used to a flow rate of the exhaust gas in the EGR valve (16) at a time when the distribution property is determined and **in that** it is determined that the distribution property falls below the specified standard in the case where the clogging rate exceeds a determination threshold.

3. The EGR control method according to claim 1 **characterized in that** the clogging rate is obtained as a ratio of pressure on an upstream side of EGR valve (16) to pressure on a downstream side of the EGR valve (16) at a time when the distribution property is determined and **in that** it is determined that the distribution property falls below the specified standard in the case where the clogging rate exceeds a determination threshold.

4. The EGR control method according to claim 2 or claim 3 **characterized in that** a target value of circulated exhaust gas that is computed on the basis of an operation state of the EGR device (101) and that should flow through the EGR valve (16) is corrected by a weighting coefficient that is defined in accordance with the clogging rate with no consideration of a reduction in the flow rate of the circulated exhaust gas flowing through the EGR valve (16) and **in that** a valve position of the EGR valve (16) is changed in accordance with a post-correction flow rate.

5. The EGR control method according to claim 4 **characterized in that** required warning processing is executed when the distribution property of the exhaust gas in the EGR valve (16) for controlling the circulation amount of the exhaust gas to the intake side falls below the specified standard.

6. An EGR device (101) comprising an EGR valve (16) that is configured to be able to control a valve position in a communication passageway (15) for communicating between an exhaust pipe (13) and an intake pipe (12) of an internal combustion engine (3) and to change a communication state of the communication passageway (15) by operation control of the EGR valve (16) by an electronic control unit (4), so as to be able to circulate some of exhaust gas to an intake side,
   wherein the electronic control unit (4) is configured:

# EP 3 112 652 B1

- to correct a circulation amount of the exhaust gas by the EGR valve (16) in accordance with a degree of degradation of a distribution property of the exhaust gas when it is determined that the distribution property of the exhaust gas in the EGR valve (16) falls below a specified standard; and
- to update a clogging rate of the EGR valve (16) as the degree of degradation of the distribution property of the exhaust gas in the EGR valve (16) only when a specified condition is satisfied;

**characterized in that**
the electronic control unit (4) is further configured:

- to investigate, whether an accelerator pedal position is brought to zero during traveling of the vehicle and whether fuel injection to the internal combustion engine (3) by fuel injection valves (2-1 to 2-n) is brought into a state of no injection; and
- to determine that the specified condition is satisfied when at least the accelerator pedal position is brought to zero during traveling of the vehicle and the fuel injection to the internal combustion engine (3) by the fuel injection valves (2-1 to 2-n) is brought into a state of no injection.

7. The EGR device (101) according to claim 6 **characterized in that**
the electronic control unit (4) is
configured to compute a ratio of a flow rate of the exhaust gas at a time when the EGR valve (16) is started to be used to a flow rate of the exhaust gas in the EGR valve (16) at a time when the distribution property of the exhaust gas is determined, set the computation result as the clogging rate of the EGR valve (16), and determine that the distribution property of the exhaust gas falls below the specified standard in the case where the clogging rate exceeds a determination threshold.

8. The EGR device (101) according to claim 6 **characterized in that**
the electronic control unit (4) is
configured to compute a ratio of pressure on an upstream side of the EGR valve (16) to pressure on a downstream side of the EGR valve (16) at a time when the distribution property of the exhaust gas is determined, set the computation result as the clogging rate of the EGR valve (16), and determine that the distribution property falls below the specified standard in the case where the clogging rate exceeds a determination threshold.

9. The EGR device (101) according to claim 7 or claim 8 **characterized in that**
the electronic control unit (4) is
configured to correct a target value of circulated exhaust gas that is computed on the basis of an operation state of the EGR device (101) and that should flow through the EGR valve (16) by a weighting coefficient that is defined in accordance with the clogging rate with no consideration of a reduction in a flow rate of the circulated exhaust gas flowing through the EGR valve (16) and to change a valve position of the EGR valve (16) in accordance with a post-correction flow rate.

10. The EGR device (101) according to claim 9 **characterized in that**
the electronic control unit (4) is
configured to execute required warning processing when it is determined that the distribution property of the exhaust gas in the EGR valve (16) for controlling the circulation amount of the exhaust gas to the intake side falls below the specified standard.

**Patentansprüche**

1. AGR-Steuerungsverfahren für eine AGR-Vorrichtung (101) eines Fahrzeugs, die dazu ausgelegt ist, in der Lage zu sein, einige der Abgase eines Verbrennungsmotors (3) zu einer Einlassseite des Verbrennungsmotors (3) zu zirkulieren,
wobei das AGR-Steuerungsverfahren folgende Schritte umfasst:

Korrigieren einer Zirkulationsmenge des Abgases durch ein AGR-Ventil (16) zum Steuern der Zirkulationsmenge des Abgases zu der Einlassseite entsprechend einem Betrag von Verschlechterung einer Distributionseigenschaft des Abgases in dem AGR-Ventil (16), wenn die Distributionseigenschaft unter einen festgelegten Standard fällt;
wobei der Grad von Verschlechterung der Distributionseigenschaft des Abgases in dem AGR-Ventil (16) eine Zusetzungsrate des AGR-Ventils (16) ist, die nur aktualisiert wird, wenn eine festgelegte Bedingung erfüllt ist, **gekennzeichnet durch** folgende Schritte:

Ermitteln, ob eine Fahrpedalposition während des Fahrens des Fahrzeugs auf null gebracht wurde und ob die Kraftstoffeinspritzung in den Verbrennungsmotor (3) durch Kraftstoffeinspritzventile (2-1 bis 2-n) in einen Status keiner Einspritzung gebracht wurde; und

Feststellen, dass die festgelegte Bedingung erfüllt ist, wenn mindestens die Fahrpedalposition während des Fahrens des Fahrzeugs auf null gebracht wurde und die Kraftstoffeinspritzung in den Verbrennungsmotor (3) durch die Kraftstoffeinspritzventile (2-1 bis 2-n) in einen Status keiner Einspritzung gebracht wurde.

2. AGR-Steuerungsverfahren nach Anspruch 1, **dadurch gekennzeichnet, dass** die Zusetzungsrate als ein Verhältnis einer Strömungsrate des Abgases zu einer Zeit, wenn die Nutzung des AGR-Ventils (16) gestartet wird, und einer Strömungsrate des Abgases in dem AGR-Ventil (16) zu einer Zeit ermittelt wird, wenn die Distributionseigenschaft festgestellt wird, sowie dadurch, dass festgestellt wird, dass die Distributionseigenschaft unter den festgelegten Standard fällt, falls die Zusetzungsrate eine Bestimmungsschwelle überschreitet.

3. AGR-Steuerungsverfahren nach Anspruch 1, **dadurch gekennzeichnet, dass** die Zusetzungsrate als ein Verhältnis von Druck an einer vorgelagerten Seite des AGR-Ventils (16) und Druck an einer nachgelagerten Seite des AGR-Ventils (16) zu einem Zeitpunkt ermittelt wird, wenn die Distributionseigenschaft festgestellt wird, sowie dadurch, dass festgestellt wird, dass die Distributionseigenschaft unter den festgelegten Standard fällt, falls die Zusetzungsrate eine Bestimmungsschwelle überschreitet.

4. AGR-Steuerungsverfahren nach Anspruch 2 oder Anspruch 3, **dadurch gekennzeichnet, dass** ein Zielwert von zirkuliertem Abgas, der auf der Grundlage eines Betriebsstatus der AGR-Vorrichtung (101) berechnet wird und der durch das AGR-Ventil (16) strömen sollte, durch einen Wichtungskoeffizienten korrigiert wird, der entsprechend der Zusetzungsrate ohne Berücksichtigung einer Reduzierung der Strömungsrate des zirkulierten Abgases, das durch das AGR-Ventil (16) strömt, definiert ist, und dadurch, dass eine Ventilposition des AGR-Ventils (16) entsprechend einer Strömungsrate nach der Korrektur verändert wird.

5. AGR-Steuerungsverfahren nach Anspruch 4, **dadurch gekennzeichnet, dass** die erforderliche Warnungsverarbeitung ausgeführt wird, wenn die Distributionseigenschaft des Abgases in dem AGR-Ventil (16) zum Steuern der Zirkulationsmenge des Abgases zu der Einlassseite unter den festgelegten Standard fällt.

6. AGR-Vorrichtung (101), die ein AGR-Ventil (16) umfasst, das dazu ausgelegt ist, in der Lage zu sein, eine Ventilposition in einer Austauschpassage (15) für den Austausch zwischen einer Auslassleitung (13) und einer Einlassleitung (12) eines Verbrennungsmotors (3) zu steuern und einen Austauschstatus der Austauschpassage (15) durch operative Steuerung des AGR-Ventils (16) durch eine elektronische Steuereinheit (4) zu verändern, um in der Lage zu sein, eine gewisse Menge des Abgases zu einer Einlassseite zu zirkulieren, wobei die elektronische Steuereinheit (4) dazu ausgelegt ist:

- die Zirkulationsmenge des Abgases von dem AGR-Ventil (16) entsprechend einem Grad von Verschlechterung einer Distributionseigenschaft des Abgases zu korrigieren, wenn festgestellt wird, dass die Distributionseigenschaft des Abgases in dem AGR-Ventil (16) unter einen festgelegten Standard fällt; und

- eine Zusetzungsrate des AGR-Ventils (16) als den Grad von Verschlechterung der Distributionseigenschaft des Abgases in dem AGR-Ventil (16) nur dann zu aktualisieren, wenn eine festgelegte Bedingung erfüllt ist;

**dadurch gekennzeichnet, dass**

die elektronische Steuereinheit (4) ferner dazu ausgelegt ist:

- zu ermitteln, ob eine Fahrpedalposition während des Fahrens des Fahrzeugs auf null gebracht wurde und ob die Kraftstoffeinspritzung in den Verbrennungsmotor (3) durch Kraftstoffeinspritzventile (2-1 bis 2-n) in einen Status keiner Einspritzung gebracht wurde; und

- festzustellen, dass die festgelegte Bedingung erfüllt ist, wenn mindestens die Fahrpedalposition während des Fahrens des Fahrzeugs auf null gebracht wurde und die Kraftstoffeinspritzung in den Verbrennungsmotor (3) durch die Kraftstoffeinspritzventile (2-1 bis 2-n) in einen Status keiner Einspritzung gebracht wurde.

7. AGR-Vorrichtung (101) nach Anspruch 6, **dadurch gekennzeichnet, dass**

die elektronische Steuereinheit (4)

dazu ausgelegt ist, ein Verhältnis einer Strömungsrate des Abgases zu einer Zeit, wenn die Nutzung des AGR-Ventils (16) gestartet wird, und einer Strömungsrate des Abgases in dem AGR-Ventil (16) zu einer Zeit zu berechnen, wenn die Distributionseigenschaft des Abgases festgestellt wird, das Berechnungsergebnis als die Zusetzungsrate des AGR-Ventils (16) festzusetzen, und festzustellen, dass die Distributionseigenschaft des Abgases unter den festgelegten Standard fällt, falls die Zusetzungsrate eine Bestimmungsschwelle überschreitet.

8. AGR-Vorrichtung (101) nach Anspruch 6, **dadurch gekennzeichnet, dass**

die elektronische Steuereinheit (4)

dazu ausgelegt ist, ein Verhältnis von Druck an einer vorgelagerten Seite des AGR-Ventils (16) und Druck an einer nachgelagerten Seite des AGR-Ventils (16) zu einer Zeit zu ermitteln, wenn die Distributionseigenschaft des Abgases festgestellt wird, das Berechnungsergebnis als die Zusetzungsrate des AGR-Ventils (16) festzusetzen, und festzustellen, dass die Distributionseigenschaft unter den festgelegten Standard fällt, falls die Zusetzungsrate eine Bestimmungsschwelle überschreitet.

9. AGR-Vorrichtung (101) nach Anspruch 7 oder Anspruch 8, **dadurch gekennzeichnet, dass**

die elektronische Steuereinheit (4)

dazu ausgelegt ist, einen Zielwert von zirkuliertem Abgas, der auf der Grundlage eines Betriebsstatus der AGR-Vorrichtung (101) berechnet wird und der durch das AGR-Ventil (16) strömen sollte, durch einen Wichtungskoeffizienten zu korrigieren, der entsprechend der Zusetzungsrate ohne Berücksichtigung einer Reduzierung in einer Strömungsrate des zirkulierten Abgases, das durch das AGR-Ventil (16) strömt, definiert ist, und eine Ventilposition des AGR-Ventils (16) entsprechend einer Strömungsrate nach der Korrektur zu verändern.

10. AGR-Vorrichtung (101) nach Anspruch 9, **dadurch gekennzeichnet, dass**

die elektronische Steuereinheit (4)

dazu ausgelegt ist, die erforderliche Warnungsverarbeitung auszuführen, wenn festgestellt wird, dass die Distributionseigenschaft des Abgases in dem AGR-Ventil (16) zum Steuern der Zirkulationsmenge des Abgases zu der Einlassseite unter den festgelegten Standard fällt.

## Revendications

1. Procédé de commande de recyclage des gaz d'échappement destiné à un dispositif de recyclage des gaz d'échappement (101) d'un véhicule qui est conçu pour pouvoir faire circuler une partie des gaz d'échappement d'un moteur à combustion interne (3) vers un côté admission du moteur à combustion interne (3),
le procédé de commande de recyclage des gaz d'échappement comprenant l'étape consistant à :

corriger une quantité de circulation des gaz d'échappement par une soupape de recyclage des gaz d'échappement (16) pour commander la quantité de circulation des gaz d'échappement vers le côté admission en fonction d'un degré de dégradation d'une propriété de distribution des gaz d'échappement dans la soupape de recyclage des gaz d'échappement (16) lorsque la propriété de distribution tombe sous une norme spécifiée ;
le degré de dégradation de la propriété de distribution des gaz d'échappement dans la soupape de recyclage des gaz d'échappement (16) étant un taux de colmatage de la soupape de recyclage des gaz d'échappement (16), qui est mis à jour uniquement lorsqu'une condition spécifiée est satisfaite,
**caractérisé par** les étapes consistant à :

vérifier si la position de la pédale d'accélérateur est amenée à zéro pendant le déplacement du véhicule et si l'injection de carburant dans le moteur à combustion interne (3) par les soupapes d'injection de carburant (2-1 à 2-n) est amenée dans un état de non-injection ; et
déterminer que la condition spécifiée est satisfaite lorsqu'au moins la position de la pédale d'accélérateur est amenée à zéro pendant le déplacement du véhicule et que l'injection de carburant dans le moteur à combustion interne (3) par les soupapes d'injection de carburant (2-1 à 2-n) est amenée dans un état de non-injection.

**2.** Procédé de commande de recyclage des gaz d'échappement selon la revendication 1, **caractérisé en ce que** le taux de colmatage est obtenu en tant que rapport d'un débit des gaz d'échappement à un moment où la soupape de recyclage des gaz d'échappement (16) commence à être utilisée sur un débit des gaz d'échappement dans la soupape de recyclage des gaz d'échappement (16) à un moment où la propriété de distribution est déterminée et **en ce qu'**il est déterminé que la propriété de distribution tombe sous la norme spécifiée dans le cas où le taux de colmatage dépasse un seuil de détermination.

**3.** Procédé de commande de recyclage des gaz d'échappement selon la revendication 1, **caractérisé en ce que** le taux de colmatage est obtenu en tant que rapport de la pression sur un côté amont de la soupape de recyclage des gaz d'échappement (16) sur la pression sur un côté aval de la soupape de recyclage des gaz d'échappement (16) à un moment où la propriété de distribution est déterminée et **en ce qu'**il est déterminé que la propriété de distribution tombe sous la norme spécifiée dans le cas où le taux de colmatage dépasse un seuil de détermination.

**4.** Procédé de commande de recyclage des gaz d'échappement selon la revendication 2 ou 3, **caractérisé en ce qu'**une valeur cible des gaz d'échappement en circulation qui est calculée en fonction d'un état de fonctionnement du dispositif de recyclage des gaz d'échappement (101) et qui doit traverser la soupape de recyclage des gaz d'échappement (16) est corrigée par un coefficient de pondération qui est défini en fonction du débit de colmatage sans considération d'une réduction du débit des gaz d'échappement en circulation traversant la soupape de recyclage des gaz d'échappement (16) et **en ce qu'**une position de soupape de la soupape de recyclage des gaz d'échappement (16) est modifiée en fonction d'un débit après correction.

**5.** Procédé de commande de recyclage des gaz d'échappement selon la revendication 4, **caractérisé en ce que** le traitement d'avertissement requis est exécuté lorsque la propriété de distribution des gaz d'échappement dans la soupape de recyclage des gaz d'échappement (16) pour commander la quantité de circulation des gaz d'échappement vers le côté admission tombe sous la norme spécifiée.

**6.** Dispositif de recyclage des gaz d'échappement (101) comprenant une soupape de recyclage des gaz d'échappement (16) qui est conçue pour pouvoir commander une position de soupape dans un passage de communication (15) pour communiquer entre un tuyau d'échappement (13) et un tuyau d'admission (12) d'un moteur à combustion interne (3) et pour modifier un état de communication du passage de communication (15) en commandant le fonctionnement de la soupape de recyclage des gaz d'échappement (16) par une unité électronique (4), de sorte à pouvoir faire circuler une partie des gaz d'échappement vers un côté admission,
l'unité de commande électronique (4) étant conçue :

pour corriger une quantité de circulation des gaz d'échappement par la soupape de recyclage des gaz d'échappement (16) conformément à un degré de dégradation d'une propriété de distribution des gaz d'échappement lorsqu'il est déterminé que la propriété de distribution des gaz d'échappement dans la soupape de recyclage des gaz d'échappement (16) tombe sous une norme spécifiée ; et
pour mettre à jour un taux de colmatage de la soupape de recyclage des gaz d'échappement (16) en tant que degré de dégradation de la propriété de distribution des gaz d'échappement dans la soupape de recyclage des gaz d'échappement (16) uniquement lorsqu'une condition spécifiée est remplie ;
**caractérisé en ce que**
l'unité de commande électronique (4) est en outre conçue :

pour vérifier si la position de la pédale d'accélérateur est amenée à zéro pendant le déplacement du véhicule et si l'injection de carburant dans le moteur à combustion interne (3) par les soupapes d'injection de carburant (2-1 à 2-n) est amenée dans un état de non-injection ; et
pour déterminer que la condition spécifiée est satisfaite lorsqu'au moins la position de la pédale d'accélérateur est amenée à zéro pendant le déplacement du véhicule et que l'injection de carburant dans le moteur à combustion interne (3) par les soupapes d'injection de carburant (2-1 à 2-n) est amenée dans un état de non-injection.

**7.** Dispositif de recyclage des gaz d'échappement (101) selon la revendication 6, **caractérisé en ce que** l'unité de commande électronique (4) est conçue pour calculer un rapport d'un débit des gaz d'échappement à un moment où la soupape de recyclage des gaz d'échappement (16) commence à être utilisée sur un débit des gaz d'échappement dans la soupape de recyclage des gaz d'échappement (16) à un moment où la propriété de distribution des gaz d'échappement est déterminée, régler le résultat du calcul comme étant le taux de colmatage de la soupape de recyclage des gaz d'échappement (16), et déterminer que la propriété de distribution des gaz d'échappement tombe en dessous de la norme spécifiée dans le cas où le taux de colmatage dépasse un seuil de détermination.

**8.** Dispositif de recyclage des gaz d'échappement (101) selon la revendication 6, **caractérisé en ce que** l'unité de commande électronique (4) est conçue pour calculer un rapport de la pression sur un côté amont de la soupape de recyclage des gaz d'échappement (16) sur la pression sur un côté aval de la soupape de recyclage des gaz d'échappement (16) au moment où la propriété de distribution des gaz d'échappement est déterminée, régler le résultat du calcul comme étant le taux de colmatage de la soupape de recyclage des gaz d'échappement (16) et déterminer que la propriété de distribution tombe sous la norme spécifiée lorsque la caractéristique de distribution dépasse un seuil de détermination.

**9.** Dispositif de recyclage des gaz d'échappement (101) selon la revendication 7 ou 8, **caractérisé en ce que** l'unité de commande électronique (4) est conçue pour corriger une valeur cible des gaz d'échappement en circulation qui est calculée en fonction d'un état de fonctionnement du dispositif de recyclage des gaz d'échappement (101) et qui doit traverser la soupape de recyclage des gaz d'échappement (16) par un coefficient de pondération qui est défini conformément au taux de colmatage sans considération d'une réduction du débit des gaz d'échappement en circulation traversant la soupape de recyclage des gaz d'échappement (16) et pour modifier une position de soupape de la soupape de recyclage des gaz d'échappement (16) selon un débit après correction.

**10.** Dispositif de recyclage des gaz d'échappement (101) selon la revendication 9, **caractérisé en ce que** l'unité de commande électronique (4) est conçue pour exécuter le traitement d'avertissement requis lorsqu'il est déterminé que la propriété de distribution des gaz d'échappement dans la soupape de recyclage des gaz d'échappement (16) pour commander la quantité de circulation des gaz d'échappement vers le côté aspiration tombe sous la norme spécifiée.

## FIG. 1

# FIG. 2

# FIG. 3

START

S102

IS LEARNING PROCESSING EXECUTION CONDITION SATISFIED?

NO

YES

S104

FULLY OPEN EGR VALVE

S106

MEASURE EGR FLOW RATE

S108

COMPUTE CLOGGING RATE

S110

STORE LEARNED VALUE

S112

CLOGGING RATE > DETERMINATION THRESHOLD?

YES

NO

S116

FLOW RATE CONTROL CORRECTION

S114

WARNING PROCESSING

RETURN

# FIG. 4

START

OBTAIN TARGET EGR EFFECTIVE
OPENING AREA & ACTUAL EGR VALVE
POSITION ⟍S202

COMPUTE STANDARD FLOW RATE &
WORST FLOW RATE ⟍S204

COMPUTE FLOW
RATE DIFFERENCE ⟋S206

COMPUTE WEIGHTING
COEFFICIENT ⟋S208

COMPUTE CORRECTED
FLOW RATE ⟋S210

COMPUTE CORRECTED VALVE
POSITION ⟍S212

RETURN

## FIG. 5

```
                    ( START )
                        |
                        v
              S102
        IS LEARNING
   NO   PROCESSING EXECUTION
   <----CONDITION SATISFIED?
                        |
                     YES |
                        v
                      S104
              FULLY OPEN EGR VALVE
                        |
                        v
                      S106B
              MEASURE PRESSURE
                        |
                        v
                      S108B
              COMPUTE CLOGGING
                   RATE
                        |
                        v
                       S110
              STORE LEARNED
                 VALUE
                        |
                        v
                    S112B
              CLOGGING RATE >           YES
              DETERMINATION THRESHOLD?  ------>
                        |
                     NO |            S116B                    S114
                        v                                       
              FLOW RATE CONTROL                      WARNING
                 CORRECTION                         PROCESSING
                        |                                |
                        v                                |
                    ( RETURN )<--------------------------
```

# FIG. 6

START

OBTAIN TARGET EGR EFFECTIVE
OPENING AREA & ACTUAL EGR VALVE
POSITION — S202

COMPUTE STANDARD FLOW RATE &
WORST FLOW RATE — S204

COMPUTE
DIFFERENTIAL
PRESSURE — S206B

COMPUTE WEIGHTING
COEFFICIENT — S208B

COMPUTE CORRECTED
FLOW RATE — S210B

COMPUTE CORRECTED
VALVE POSITION — S212

RETURN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004245118 A
- US 20140251287 A1
- DE 4135190 A1
- JP 2005504210 T